(19) **Europäisches Patentamt European Patent Office Office européen des brevets**

(11) **EP 4 243 341 B1**

(12) **EUROPEAN PATENT SPECIFICATION**

(45) Date of publication and mention
of the grant of the patent:
**16.07.2025 Bulletin 2025/29**

(21) Application number: **22161388.8**

(22) Date of filing: **10.03.2022**

(51) International Patent Classification (IPC):
*H04L 9/40* (2022.01)        *G06F 21/55* (2013.01)

(52) Cooperative Patent Classification (CPC):
**H04L 63/1425; G06F 21/554; H04L 63/1416**

(54) **METHOD AND DEVICE FOR MONITORING OF NETWORK EVENTS**

VERFAHREN UND VORRICHTUNG ZUM ÜBERWACHEN VON NETZWERKEREIGNISSEN

PROCÉDÉ ET DISPOSITIF POUR SURVEILLER DES ÉVÉNEMENTS DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.09.2023 Bulletin 2023/37**

(73) Proprietor: **Vocalink Limited
London EC4R 3AB (GB)**

(72) Inventors:
• **Chester, Graham David
St Albans, AL1 1RU (GB)**

• **Patel, Prina Rajendra Kumar
Old Coulsdon, CR5 1JD (GB)**
• **Ix, Sebastian
London, N6 5LD (GB)**

(74) Representative: **Barker Brettell LLP
100 Hagley Road
Edgbaston
Birmingham B16 8QQ (GB)**

(56) References cited:
**US-A1- 2020 012 900      US-A1- 2020 366 698
US-A1- 2021 103 580**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

**Field**

The present invention relates to machine learning models for detecting security threats in networks. In particular, methods and devices for monitoring machine learning models capable of detecting fraudulent activity network security threats and methods and devices for monitoring the inputs to such machine learning models.

**Background**

Computer networks can be large and handle a high number of network events. Although many of these network events may be legitimate, a proportion will always be illegitimate. When a security threat occurs, it may be desired to determine which network entities have been involved with the security threat. Machine learning has proven a tool capable of monitoring large numbers of network events to determine which are legitimate and which are attempts by nefarious actors to interfere with the network deceptively through these security threats.

Nefarious actors may change their activities over time. As these machine learning models are trained on past behaviours their reliability may change over time due to these change in activities. Thus, the accuracy of detection systems running these machine learning models may change leading to increasing number of these fraudulent network events being missed by the detection system. Conventionally these security threats that are missed will only be picked up later as feedback from the network entities involved long after the security threat has happened, that is, if they are picked up at all. This can have adverse consequences for the network.

One way, in which this might be rectified is to regularly schedule re-training of the machine learning models. However, a complete re-training can be computationally and labour intensive. Therefore, by regularly scheduling re-training of the machine learning model this may use resources both time and computational that are unnecessary if, in fact, the re-training is not required at that particular time.

The present invention aims to solve at least these problems.

US2021/103580 discloses methods for detection of anomalous data samples from a plurality of data samples using an anomaly detection procedure.

**Summary of Invention**

According to a first aspect there is provided a computer implemented method of monitoring a machine learning model for enabling identification of fraudulent activity in a network, and providing corrective actions, the method comprising: applying a machine learning model to a dataset relating to activity in a network, the dataset comprising a plurality of features as inputs into the machine learning model, the machine learning model having been trained on a training dataset to identify fraudulent activity in a network; monitoring a feature of the plurality of features to determine drift of the feature from an expected value indicating incorrect identification of whether activity is fraudulent or not fraudulent , wherein the step of monitoring comprises: determining a feature distribution for the feature at a current time; comparing the determined feature distribution to a reference feature distribution for the feature, the reference feature distribution determined from the training dataset; determining an unexpected discrepancy between the determined feature distribution and the reference feature distribution that indicates feature drift; and taking corrective action based on determining the unexpected discrepancy between the determined feature distribution and the reference feature distribution that indicates feature drift; wherein the step of monitoring a feature comprises: tracking a change in the feature distribution for the feature over time through performing the step of: determining a feature distribution for the feature at various points in time and comparing the determined feature distribution at each point in time to the reference feature distribution for the feature to generate a comparison value at each time; and wherein the step of determining an unexpected discrepancy between the determined feature distribution and the reference feature distribution that indicates drift further comprises: comparing an average comparison value over time to determine change in the feature distribution indicating drift.

Preferably, the feature distribution may be the distribution of the feature over its possible range of values.

Preferably, the step of comparing may comprise using a Jenson-Shannon divergence calculated based on the determined feature distribution and the reference feature distribution.

Preferably, taking corrective action may comprise: re-training the machine learning model based on an updated training dataset that takes into account the determined feature drift.

Preferably, the method may further comprise: applying the re-trained machine learning model to a dataset relating to activity in a network; and identifying a fraudulent activity in a network from the re-trained machine learning model.

Preferably, the method may further comprise generating an alert that incorrect identification of whether activity is fraudulent or not fraudulent has occurred based on the determining of the unexpected discrepancy. The incorrect identification of whether an activity is fraudulent or not may be caused by a change in fraudulent behaviours. Thus, the method may identify changing patterns of fraudster behaviour. **In** some arrangements, the alert may comprise a prompt to adjust the features to capture the change in behaviour. Adjusting the features may comprise adding new features. This may then require re-training the machine learning model based on an updated training dataset that takes into account the adjusted features.

Preferably, the method may further comprise taking corrective action only when the unexpected discrepancy is above, or below a threshold value.

Preferably, the pre-determined points in time may be daily. Alternatively, it may be any length of time. For instance, weekly, or monthly.

Preferably, the reference feature distribution determined from the training dataset may be determined by: arranging data from the training dataset relating to the feature in a series of buckets each bucket representing a range of values for such feature in the training dataset.

Preferably, the step of arranging data may further comprise arranging the data above the $2^{nd}$ percentile in a first bucket, and the data above the $98^{th}$ percentile in a second bucket, and arranging remaining data equally between remaining buckets of the series of buckets.

Preferably, wherein the determined feature distribution may be determined by: arranging data from the dataset relating to the feature in a series of buckets each bucket representing a range of values for such feature .

Preferably, the network may be a financial network.

Preferably, the activity may be transactions and the fraudulent activity may be a fraudulent transaction. The transactions may be payment transactions.

Preferably, the plurality of features may comprise at least one of: number of transactions from or to an account in a period of time, time of transaction, characteristics of the account to which a transaction is made. The characteristic of the account may be the type of account. This may be the specific type of bank account. The number of transactions from or to an account in a period of time may be considered based over a plurality of different time periods (rather than a single time period).

According to a further aspect there is provided a non-transitory computer-readable storage medium storing instructions thereon which, when executed by one or more processors, cause the one or more processors to perform the method of the above aspect.

According to a further aspect there is provided a data processing device comprising one or more processors and the non-transitory computer-readable storage medium of the above aspect.

According to a further aspect there is provided a computer implemented method of enabling identification of fraudulent activity in a network using a machine learning model, wherein the machine learning model is monitored by the method of any of the above aspect.

According to a further aspect there is provided a non-transitory computer-readable storage medium storing instructions thereon which, when executed by one or more processors, cause the one or more processors to perform the method of the above aspect.

According to a further aspect there is provided a data processing device comprising one or more processors and the non-transitory computer-readable storage medium of the above aspect.

## Description of Drawings

Embodiments of the present invention are described below, by way of example only, with reference to the accompanying drawings, in which:

Figure 1 shows a system according to embodiments of the present disclosure;

Figure 2 shows an example method of monitoring feature distributions of a machine learning model to determine drift according to an embodiment of the present disclosure;

Figure 3 shows an example plot of Jenson Shannon Divergence over time for a feature distribution of the machine learning model with feature drift and a feature distribution of the machine learning model with no feature drift according to an embodiment of the present disclosure;

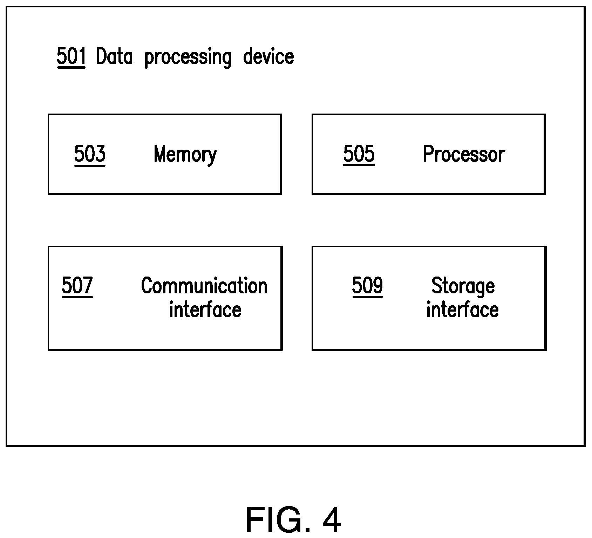

Figure 4 shows a data processing device according to embodiments of the present disclosure capable of performing the method of Figure 2.

## Detailed Description

As used herein, the followings terms have the following meanings:
Network entity: a Network entity is an entity within a network which has associated with it one or more data. The data may be stored in one or more databases associated with the network entity.

Network event: a network event is an event between network entities in the network. A network event involves the movement of data from one network entity to another. The network event may be a legitimate network event or an illegitimate network event. A network event may be an example of a network activity.

Network security threat: is an event within a network which leads to an unauthorised access, altering or movement of data within the network, or an undesired access, altering or movement of data within the network. An unauthorised action is any action (network event) that is not approved by the party that is in control of the data. This may include unauthorised access of data and the sending of said data to a network entity that is not authorised to hold said data. An undesired action is an action that might be initially authorised by the party but done so under false pretences. The network security threat is an illegitimate network event. A network security threat may be an example of fraudulent activity in the network, otherwise called a fraudulent network security event.

Nefarious actors: are entities external to the network whose aim it is to cause a network security threat.

Network: The network is the whole group of network entities that are capable of experiencing network events between them.

The present invention relates to the monitoring of machine learning models used for enabling identification of fraudulent activity in a network. More specifically, it involves a detailed method of detecting feature drift for features of the machine learning model to determine change in behaviour of nefarious actors involved in the network and to update the machine learning model based on these detected changes thereby to ensure that the accurate determination of fraudulent activities by the machine learning model is maintained.

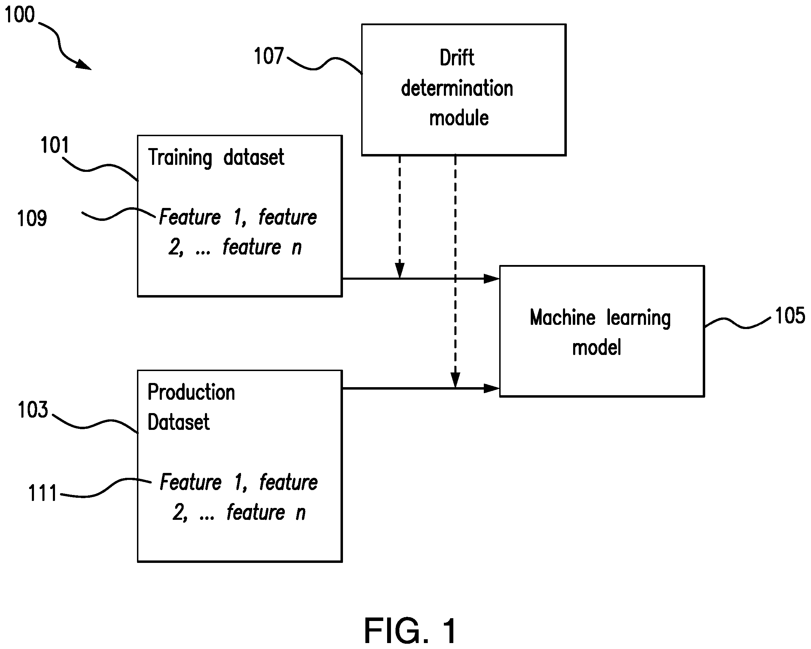

Figure 1 shows a system 100 according to an aspect of the present invention. The system 100 includes a machine learning model 105 that is capable of analysing and identifying fraudulent activity in a network. The machine learning model 105 is trained on training dataset 101 representative of a plurality of network events. Training dataset 101 contains several features 109 which represent aspects of the network events represented by the training dataset. The values of the features may provide an indication of whether the network event is legitimate or not (i.e., a security threat or not). The training dataset 101 includes both legitimate and fraudulent network events.

Once the machine learning model 105 has been trained, the machine learning model 105 can be used to make predictions (i.e., classifications) for dataset 103 representative of a plurality of network events. Dataset 103 also contains several features **111** which represent aspects of the network events represented by the dataset 103. The features **111** are the same as the feature 109 used in the training dataset 101, although the values of the features **111** are specific to the network events in the dataset 103. In the present case the predictions are whether network events in dataset 103 are fraudulent or not. The machine learning model 105 may give an output for a particular network event as a score valued between 0 and 1 where values closer to *1* indicate a high likelihood of a security threat, and those closer to 0 indicate it is unlikely to be a security threat. Dependent on the score a particular action may be carried out such as:

    1) stop the network event if the score is high enough
    2) provide a warning that the network event may relate to a fraudulent action and that the user should reconsider
    3) permit the network event to take place if the score is low enough

It would be expected that a certain number of fraudulent events would be present at any one time, so a deviation from the feature distribution established at model training time may indicate an issue in the network.

However, this alone is not enough to determine what the issue is.

Over time the accuracy of the machine learning model 105 may change due to changes in the type of network security threats. In particular, the weighting or decision values of particular features may not provide an accurate determination of whether network events are legitimate or not. For instance, in the current machine learning model if a given feature is within a certain range (e.g. above 93 but less than 100) then it may be scored highly (i.e. indicating fraud), but due to behavioural changes the feature value that indicates fraud might now require to be within a different range (e.g. over 103 and less than 120) because the feature has drifted- but the old machine learning model will not take into account this change and will experience drift. Drift determination module 107 may monitor the machine learning model 105 to determine if this is the case, as will now be described in greater detail below.

Rather than looking at the output of the machine learning model 105 to determine any problems the drift determination model 107 is configured to monitor the features 111 of the production dataset 103 input into the machine learning model at different points in time. By comparing the features 111 of production dataset 103 to the features 109 at model training time issues with the machine learning model 105 can be pre-empted so that corrective action can be taken. This can indicate the accuracy of the machine learning model changing and can indicate network security threats that are occurring and ongoing.

The drift determination model 107 initially determines a reference feature distribution for each feature 109, from the training dataset 101. This is done at the point when machine learning model 105 is being trained. This reference feature distribution for each feature is then stored by the drift determination module 107 for use at a later point in time. The reference feature distribution for a feature is the distribution of values that this feature has in the training dataset, i.e. the distribution of the feature over its range. It represents the expected values of the feature.

The drift determination model 107 then determines the feature distribution for each feature at certain points in time from datasets, such as production dataset 103, on which the machine learning model 105 is being used to classify network events. The feature distribution for a feature is the distribution of values that this feature has in its dataset, i.e. the distribution of the feature over its range. This can be used to pre-empt issues with the machine learning model 105 by comparing the feature distribution at the present time (on which the machine learning model is being used) to the reference feature distribution calculated from the training data. A significant difference between the refence feature distribution and the current feature distribution can indicate a change in behaviour regarding the specific feature. This can indicate that the machine learning model may no longer make predictions that are accurate. This can lead to fraudulent network events being miscategorised and/or missed.

Specifically, a feature distribution may be determined for a production dataset 103 which is being input into the machine learning model daily (or at other appropriate interval) with a comparison made with the reference feature distribution. This may be done for each feature. A significant difference between the reference feature distribution and a single value of a current feature distribution may indicate a single security threat that may require action. However, by comparing the difference between the feature distributions over time, i.e., over a period of days, it can be determined if the difference is an isolated event. If it is determined that it is not an isolated event it can indicate that the behaviour is no longer accurately reflected by the specific features on which it was trained, and if the difference continues to increase over time this can indicate feature drift. This can indicate that the machine leaning model needs to be re-trained otherwise fraudulent network events may be missed due to the model not accurately categorising the network events effectively. It may also be a sign of an ongoing network security threat as the actions of the fraudulent party may be changing.

In one method according to the present invention the feature distributions may be determined by arranging the data in production dataset 103 relating to a feature into a series of buckets. For instance, in the case of 5 buckets an example may be the following:

> *Bucket 0 to 0.02* contains 60% of the feature value for a day (Thus, this indicates that the probability of the feature having a value of between 0 to 0.02 is 60%.)
> *Bucket 0.02 to 0.2* contains 20% of the feature values for a day
> *Bucket 0.2 to 0.8* contains 10% of the feature values for a day
> *Bucket 0.8 to 0.98* contains 9% of the feature values for a day
> *Bucket 0.98 to 1* contains 1% of the feature values for a day

However, it has been found that a preferred arrangement may involve arranging the data into 20 buckets. The $2^{nd}$ and $98^{th}$ percentile of the data may be calculated with any value counts below the 2nd percentile added to a first bucket, and any value counts over the $98^{th}$ percentile added to a second (final) bucket (appended to the other end). The remaining data is split into the remaining evenly spaced 18 buckets between the first and second (final) bucket. Advantageously, this minimises the risk of extreme outliers distorting the middle 18 buckets. The use of 20 buckets has advantageously been found to be a good compromise between responsiveness to change, and noise damping. However, any number of buckets may be used depending on the system in which the method is being implemented. This sorting into buckets may be carried out for each individual feature and the buckets include both fraud and legitimate values.

The same process of sorting the data into buckets as described above may also be used to determine the reference feature distribution from training dataset 101. A reference feature distribution for each feature to be monitored may be determined in this way.

The arrangement of buckets of the reference feature distribution and the arrangement of buckets of the current reference distribution for a particular feature are then compared, as described above. A mechanism to derive a single number that enables comparison of these feature distributions may be the use of the Jenson Shannon Divergence method. Specifically, the Jenson Shannon Divergence (JSD) can be calculated from:

$$JSD(P\|Q) = \tfrac{1}{2} * \; D(P\|M) + \tfrac{1}{2} \; D(Q\|M)$$

where M = (P+Q) / 2; where D(P‖M) is the Kullback-Leibler divergence (or relative entropy) between P and M which is calculated as D(P‖M) = sum over all x of P(x) * log (P(x) / M(x)), where the reference feature distribution is P, and the determined average feature distribution over P and Q for the feature at the current time is M, and D(Q‖M) = sum over all x of Q(x) * log (Q(x) / M(x)).

The output from the JSD is provided as a single value which indicates the difference between the reference feature distribution and the current feature distribution. By calculating the JSD daily (or at a defined time period) it may be compared over time to determine feature drift. By doing this for each feature it can be determined which features are causing any problem with model performance and thus indicates which actions of the nefarious actors are changing (by changing feature distributions).

Once it has been determined that feature drift is taking place corrective action may be taken. Corrective actions can involve re-training the machine learning model to take into account the change in feature distribution. For instance, the current dataset 103 (i.e. production dataset 103) may be used to re-train the machine learning model, as the current dataset 103 reflects the change in feature distribution. In addition, or alternatively, the corrective action may be to send an alert to a network entity or the individual responsible for the network entity to indicate the presence of an ongoing network security threat causing the feature drift (this alert may be in the form of a message or an alarm), and/or a general change in behaviour of nefarious actors so that they can take the appropriate action. This may include stopping the network events that are deemed to be related to the fraudulent behaviour, or reversing the network events (i.e., the fraudulent movement of data).

The JSD may also be used to alert the occurrence of a one-off network security threat. This may be a security threat that is happening for only a certain period of time (such as hours to days). For instance, if the JSD value for a certain feature is above a threshold value (or increases by a certain amount from a previous value) then this may indicate the occurrence of a new type of network threat. Determining such an increase for multiple features may further increase the likelihood that a threat is occurring. This may lead to the drift determining module taking corrective action. For instance, the action may be to send an alert to a network entity or the person responsible for the network entity to indicate the presence of an ongoing network security threat. This alert may be in the form of a message or alarm. Alternatively, or in addition, this may include taking action to stop the network events that are deemed to be related to the threat. An example of this type of security threat may be that a security vulnerability in the network is being exploited. Therefore, the threat may take place until the vulnerability is fixed.

In some instances, the feature drift may indicate the presence of technical issues rather than a network security threat with corrective action being to rectify the technical issues.

Advantageously, by proactively monitoring features a much faster response to (and a more detailed view of) changing fraudster behaviours can be achieved than having to wait for infrequent/delayed feedback from institutions overseeing the network to indicate that frauds have occurred. It also enables much more detailed analysis of these changing behaviours than could be obtained from feedback based on individual instances of network security breaches.

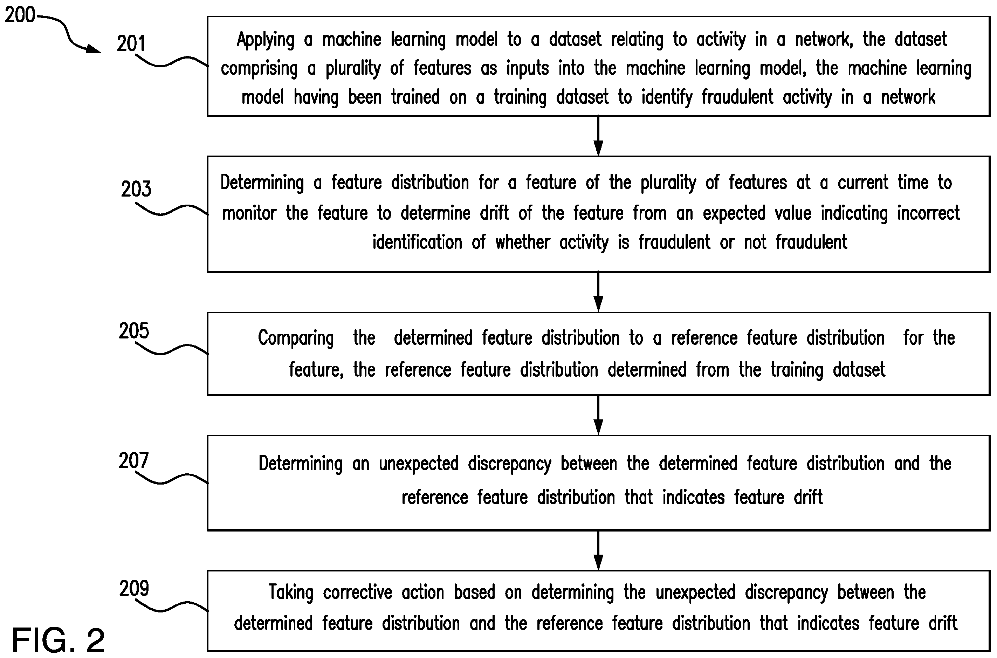

Figure 2 shows an example method 200 that may be carried out by system 100.

At step 201 the machine learning model 105 is applied to a dataset 103 relating to activity in a network, the dataset comprising a plurality of features 111 as inputs into the machine learning model 105, the machine learning model 105 having been trained on a training dataset 101 to identify fraudulent activity in a network.

At step 203 a feature distribution is determined, by drift determination module 107, for a feature of the plurality of features 111 at a current time to monitor the feature to determine drift of the feature from an expected value indicating incorrect identification of whether activity is fraudulent or not fraudulent.

At step 205 the determined feature distribution is compared, by drift determination module 107, to a reference feature distribution for the feature, the reference feature distribution determined from the training dataset.

At step 207 an unexpected discrepancy is determined, by drift determination module 107, between the determined feature distribution and the reference feature distribution that indicates feature drift.

At step 209 corrective action is taken based on determining the unexpected discrepancy between the determined feature distribution and the reference feature distribution that indicates feature drift.

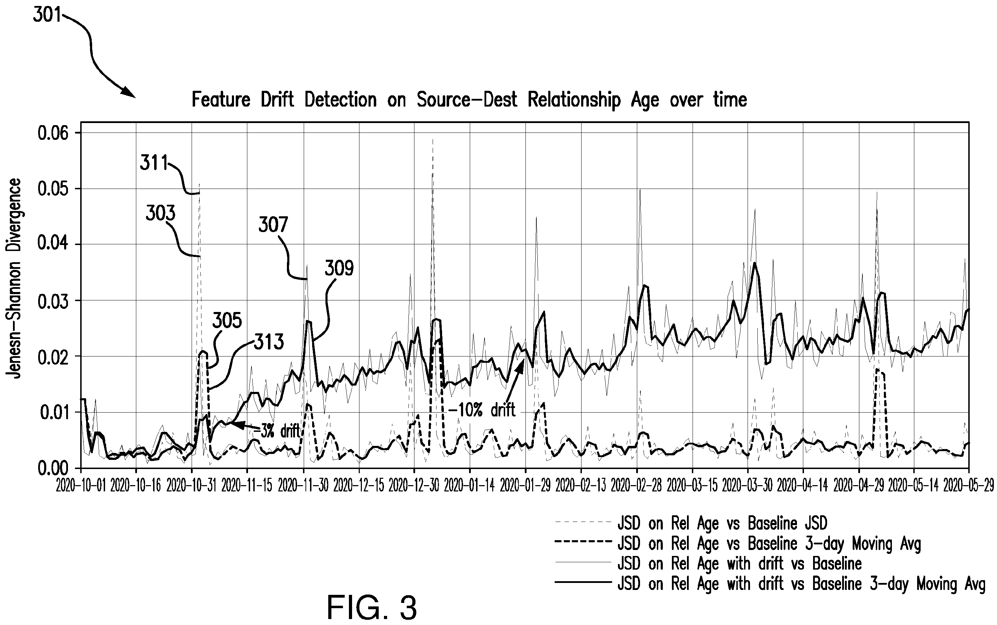

Figure 3 shows an example plot 301 of Jenson Shannon Divergence calculated according to an aspect of the present disclosure for the feature of the machine learning model 105 "source-dest relationship age over time". The feature "source-dest relationship age over time" being the feature which looks at the age of the relationship between the two network entities involved in a network event. Specifically, the age of a relationship between two network entities involved in a network event may indicate the likelihood of it being a fraudulent network event - with new relationships more likely indicating illicit activity compared to older established relationships.

The Jenson Shannon Divergence (JSD) in Figure 3 is calculated as described above from the reference feature distribution, calculated from the training dataset 101 that has been used to train the machine learning model 105, and the feature distribution at the current time. As can be seen from Figure 3 the JSD is calculated daily and plotted against date. Figure 3 shows the period between 1/10/2020 to 29/05/2021 and the associated JSD.

Line 303 shows the JSD where the feature remains stable (i.e., no drift), with line 305 showing the 3-day moving average of line 303. The lack of drift can be seen by the fact that the JSD does not really change over time. Although there are peaks and troughs in this line, such as spike 313 (spike 311 in line 303) at around 31/10/20, these may indicate an isolated event - such as a specific attack on the network, or even an entity transacting an unusually high number of network events for a legitimate reason, but do not indicate drift. However, the average JSD stays relativity constant when viewed over a long time period as shown here at around 0.005. Thus, the feature is behaving as expected and therefore the machine learning model 105 is behaving as expected for this feature.

Line 307 shows the JSD over time where the feature does not remain stable (i.e., it is drifting), with line 309 showing the 3-day moving average of line 307. As can be seen, line 307 starts with a JSD around the same as line 303 indicating that at this time period, i.e., between 1/10/2020 and around 31/10/2020, the feature is behaving as expected, with the JSD staying fairly constant (with peaks and troughs indicating isolated events (as per spike 311 in line 303). However, at around 31/10/20 the feature starts to drift as can be witnessed by the average JSD increasing. At around early November 2020 the JSD is around 0.009, rising around 29/01/2021 to 0.020. By 29/05/21 the JSD is around 0.025. This increasing average value of the JSD is implicit of drift and therefore that the behaviour of this feature is different to when the machine learning model 105 was trained. Thus, the predictions (classification) generated by the machine learning model 105 will degrade over time due to this feature drift as the current feature distributions are very different to the feature distributions at model training time. Even small changes in feature distribution can be captured with in early November 2020 the feature distribution has been drifted by only 3% whereas around 29/01/2021 the feature distribution has been drifted by 10%.

The feature drift may be caused by the fact that behaviours change over time. For instance, nefarious actors may change their activities over time. Accordingly, a line of attack that previously took a high prominence may become less often used over time. This means that the machine learning model 105 that is trained to detect fraudulent network security events may not be trained on the latest behaviours and thus may fail to accurately detect security threats. For instance, in this case where the feature is "source-dest relationship age over time", i.e., the feature which looks at the age of the relationship between the two network entities involved in a network event, the nefarious actors may stop using network entities that have no relationships with each other and may instead target network entities that have existing relationships. Thus, the significance of this feature may change from model training time as indicated by the change in the feature distribution when compared to the training dataset 101.

Model degradation can lead to the requirement for increased computing resources over time to identify network security threats that are missed by the model. This is because data relating to the network events will require subsequent passes through the machine learning model 105 once it is later determined that the model prediction accuracy has decreased (which conventionally might not be picked up until a large amount of network events have been analysed by the model). However, by actively monitoring the features, in the way described above, it can be determined much more quickly that the machine learning model 105 needs re-training, by observing the feature drift.

Model degradation can lead to substantially increased fraud as the model fails to detect some frauds. Conversely it could also lead to an increase in legitimate network events being identified as fraud, which is undesirable. As this may increase the number of fraud warnings or stopped network events.

Furthermore, by the above method it can be quickly determined which features are causing the machine learning model 105 to make inaccurate predictions. This contrasts with starting with an output that indicates the model is not performing to its potential and then having to later determine which features are responsible.

**In** addition, the re-training of the machine learning model is only performed, when necessary, rather than routinely re-training after a pre-set time period. Therefore, this may reduce the amount of computing and labour resources required as re-training can be both labour and computer intensive.

As the determination of model degradation is quick as described above, it means that the detection of the fraudulent network security events can be detected much quicker compared to cases where the model performance is determined based on feedback from network entities after the event. Thus, corrective actions to stop and prevent the network security threat can be taken much more quickly providing a much greater level of security and resilience to attack from nefarious actors.

Upon determining that feature drift has occurred, it may be decided to re-train the machine learning model 105 in order to ensure it is classifying correctly. Thus, the training dataset 101 may be updated based on the change in feature distribution, i.e., to reflect the change in behaviours. In this case, the current (or more recent) dataset 103 that shows the change in feature distribution may be used to re-train the machine learning model 105. In this way, the machine learning model 105 will return to accurately predicting network security threats thus removing feature drift. The features of the updated machine learning model 105 will then be actively monitored in the same way as described above.

Figure 3, as described above shows drift in one direction - indicating classification of network events being legitimate when perhaps they are not. However, drift may also occur in the other direction indicating classification of network events of being fraudulent when perhaps they are not. The methods and systems described herein can determine both cases.

Figures 3 is just one example plot of JSD for one feature distribution. However, in reality one of these plots would be generated for each feature of the machine learning model 105. In this way, each feature can be independently tracked such that corrective action can be taken for each feature if there is a change in the behaviour of the nefarious actors. Alternatively, only select features may be monitored, rather than all the features of the machine learning model. For instance, the most critical features that are likely to change may be monitored with the other feature not monitored. Alternatively, different features may be monitored on different days to each other. For instance, the features may be monitored once a week with different features monitored each day throughout the week.

The feature drift in Figure 3 show relatively slow feature drift over period of months. However, the above system and methods may also be used to detect more sudden feature drifts which can occur over the course of weeks, or even days. Of course, the JSD will need to be calculated frequently enough to ensure such sudden drifts can be detected.

In one embodiment, the network described herein may be a payment network. In this instance, the network events may be payment transactions. The transactions described may be any type of financial payment transactions. For instance, in the United Kingdom, this may include the Faster Payments Service (FPS) payment system, Bankers' Automated Clearing Service (BACS) payment system, Clearing House Automated Payment System (CHAPS), Society for Worldwide Interbank Financial Telecommunications (SWIFT) payment system, or the like. The transactions may be between different bank accounts (i.e., the network entities may be bank accounts). The network security threat may be a fraudulent transaction by a fraudster (the nefarious actor). The fraudulent transaction may include someone fraudulently accessing a bank account to use the funds illegitimately without authorisation. However, the fraudulent transaction may also include scams. For instance, "authorised push payment" (APP) fraud.

However, the present invention may be used for other types of networks, and network events (rather than payment transactions) as would be apparent to the skilled person.

An example of a feature is described above in relation to Figure 3. However, as outlined above the datasets may include many different features. Further examples of features may include **"time of network events (e.g., hour of day)"**. For instance, in the example of the network events being payment transactions, fraudulent transactions may be indicated by financial transactions at a certain time of the day, such fraudulent transaction being during the night in the particular time zone that the account is registered.

A further example feature may be **"time since last network event"**. For instance, in the example of the network events being payment transactions, this feature would be **"time since last transaction"**. Specifically, how busy the account is over a period of time may be a useful indicator of fraud, i.e., if the account has few transactions, then suddenly starts being involved in transactions, then it could indicate fraudulent behaviour.

A further example feature may be **"destination type of network entity"**. For instance, certain types of network entities may be known to be used in fraudulent activity. For instance, in the example of the network events being payment transactions, this feature would be **"destination type of account"** with the destination being the account at which the transaction is received. Some accounts, such as at banks with simplified/frictionless account opening criteria, or cryptographic currency exchanges, may be more likely to be target than conventional high street banks thus indicating a higher chance of fraud.

Drift as described above, may be a result of the nefarious actors moving away from these certain characteristics as indicated by the features, examples of which are described above. The above are just some example features that may be used for indicating the presence of network security threat by the machine learning model. Typically, there may be over 150 different features that may be used. In some instances, there may be over 200.

As outlined above, the feature drift may indicate the presence of technical issues rather than a network security threat with this used to take corrective action taken to rectify the technical issues. For instance, a separate system may be used to calculate a particular feature which if the system if not working it may return a default value. For instance, when making a payment payee name checker returns a score between 0 and 1 depending on how close the account name that you specify on the phone banking app is to the name on the actual account. The output of this payee name check may be used as a feature value. However, if the payee name check system is down a default feature value will be returned. The feature drift monitor would detect that there is an increase in this value from the feature distribution.

The machine learning model 105 can be any type of machine learning model known to the skilled person. For instance, the machine learning model may be any model capable of accepting a set of features outputting a probability. In the case where the network is a payment network and the network events are transactions, the machine learning model may use a random forest or support-vector machine model. For instance, it may use Gradient Boosted Decision Tree models, or deep learning models. The machine learning model may be referred to as a classifier, i.e., its purpose is to classify network events into whether they are legitimate or fraudulent and to output the probability of such.

It will be appreciated that any of the methods described herein, and any step of the methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of any method may be implemented by different processors that are all collectively acting in accordance with computer-readable instructions stored on one or more storage media. The processor(s) may be component(s) of system, for example a processor of a device.

Similarly, any steps of any of the methods described herein may be performed by data processing devices. By way of example, Figure 5 shows in schematic form a data processing device 501 that is suitable for performing the functions of the drift determination module 107 and/or executing the machine learning model 105. The data processing device 501 may automatically perform any of the methods described herein.

Data processing device 501 includes a processor 505 for executing instructions. Instructions may be stored in a memory 503. Processor 505 may include one or more processing units (e.g., in a multi-core configuration) for executing instructions. The instructions may be executed within a variety of different operating systems on the data processing device 501, such as UNIX, LINUX, Microsoft Windows®, etc. More specifically, the instructions may cause various data manipulations on data stored in memory 503 (e.g., create, read, update, and delete procedures). It should also be appreciated that upon initiation of a computer-implemented method, various instructions may be executed during initialization. Some operations may be required to perform one or more methods described herein, while other operations may be more general and/or specific to a particular programming language (e.g., C, C#, C++, Java, or other suitable programming languages, etc.).

Processor 505 is operatively coupled to a communication interface 507 such that data processing device 501 can communicate with a remote device, such as another data processing device of the system. For example, communication interface 507 may receive communications from another member of the system.

Processor 505 may also be communicatively coupled to a storage device such as a database, depending on the function of data processing device 501 within the context of the system. The storage device is any computer-operated hardware suitable for storing and/or retrieving data, where in the case of a secure storage medium the data is stored and retrieved securely.

The storage database may store the training dataset 101 and/or the production dataset 103, and it can be external to data processing device 501 and located remotely. Alternatively, it can be integrated in data processing device 501. For example, data processing device 501 may include memory 503 as one or more hard disk drives acting as a storage database. Alternatively, where the storage database is external to data processing device 501, it can comprise multiple storage units such as hard disks or solid-state disks in a redundant array of inexpensive disks (RAID) configuration. The storage database may include a storage area network (SAN) and/or a network attached storage (NAS) system.

Processor 505 can be operatively coupled to the storage device (storage database) via a storage interface 509. Storage interface 509 is any component capable of providing processor 505 with access to the storage device. Storage interface 509 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 505 with access to the storage device.

Memory 503 may include, but is not limited to, RAM such as dynamic RAM (DRAM) or static RAM (SRAM), ROM, erasable programmable read-only memory (EPROM), electrically erasable programmable read-only memory (EEPROM), and non-volatile RAM (NVRAM). The above memory types are exemplary only and are not limiting as to the types of memory usable for storage of a computer program.

As used herein, the term "non-transitory computer-readable media" is intended to be representative of any tangible computer-based device implemented in any method or technology for short-term and long-term storage of information, such as, computer-readable instructions, data structures, program modules and sub-modules, or other data in any device. The methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Furthermore, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the specification herein, the above-described embodiments of the disclosure may be implemented using computer programming or engineering techniques including computer software, firmware, hardware or any combination or subset thereof. Any such resulting program, having computer-readable code means, may be embodied, or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

Although the methods described herein use the Jenson Shannon Divergence in other arrangements other methods for comparing the feature distribution to the reference (baseline) feature distribution may be used. For instance, Kullback-Leibler method may alternatively be used.

Although it is described above that 20 buckets may be used and have been found optimal, any number of buckets may be used. For instance, fewer or more buckets may be used. For instance, 10 buckets may be used, or 40 buckets. Alternatively, other methods may be used. Too few buckets may mean that the model is not sensitive enough and using too many may mean that it is too sensitive to noise.

The JSD is described above as being calculated daily. However, it need not necessarily be calculated every day. The JSD may alternatively be calculated every other day, weekly, or even monthly.

## Claims

1. A computer implemented method (200) of monitoring a machine learning model for enabling identification of fraudulent activity in a network, and providing corrective actions, the method comprising:

    applying (201) a machine learning model to a dataset relating to activity in the network, the dataset comprising a plurality of features as inputs into the machine learning model, the machine learning model having been trained on a training dataset to identify fraudulent activity in the network;

monitoring (203) a feature of the plurality of features to determine drift of the feature from an expected value indicating incorrect identification of whether the activity is fraudulent, wherein the step of monitoring comprises:

determining a feature distribution for the feature at a current time;
comparing (205) the determined feature distribution to a reference feature distribution for the feature, the reference feature distribution determined from the training dataset;
determining (207) an unexpected discrepancy between the determined feature distribution and the reference feature distribution that indicates feature drift; and
taking (209) corrective action based on determining the unexpected discrepancy between the determined feature distribution and the reference feature distribution that indicates the feature drift;

wherein the step of monitoring a feature further comprises:

tracking a change in the feature distribution for the feature over time through performing the step of: determining a feature distribution for the feature at various points in time and comparing the determined feature distribution at each point in time to the reference feature distribution for the feature to generate a comparison value at each time; and
wherein the step of determining an unexpected discrepancy between the determined feature distribution and the reference feature distribution that indicates drift further comprises: comparing an average comparison value, derived from said comparison value at each time, over time to determine change in the feature distribution indicating the feature drift.

2. The computer implemented method of claim 1, wherein the step of comparing comprises using a Jenson-Shannon divergence calculated based on the determined feature distribution and the reference feature distribution.

3. The computer implemented method of claim 1 or 2, wherein taking corrective action comprises: re-training the machine learning model based on an updated training dataset that takes into account the determined feature drift.

4. The computer implemented method of claim 3, further comprising

applying the re-trained machine learning model to a dataset relating to activity in a network; and identifying a fraudulent activity in a network from the re-trained machine learning model.

5. The computer implemented method of any preceding claim, further comprising generating an alert that incorrect identification of whether activity is fraudulent has occurred based on the determining of the unexpected discrepancy.

6. The computer implemented method of claim 5, further comprising taking corrective action only when the unexpected discrepancy is above, or below a threshold value.

7. The computer implemented method of any preceding claim , where the pre-determined points in time are daily.

8. The computer implemented method of any preceding claim, wherein the reference feature distribution determined from the training dataset is determined by:
arranging data from the training dataset relating to the feature in a series of buckets each bucket representing a range of values for such feature in the training dataset.

9. The computer implemented method of claim 8, wherein the step of arranging data further comprises arranging the data above the $2^{nd}$ percentile in a first bucket, and the data above the $98^{th}$ percentile in a second bucket, and arranging remaining data equally between remaining buckets of the series of buckets.

10. The computer implemented method of any preceding claim, wherein the determined feature distribution is determined by:
arranging data from the dataset relating to the feature in a series of buckets each bucket representing a range of values for such feature.

11. The computer implemented of any preceding claim, wherein the network is a financial network, and wherein the activity is payment transactions and the fraudulent activity is a fraudulent payment transaction.

12. The computer implemented of claim 11, wherein the plurality of features comprise at least one of: number of transactions from or to an account in a period of time, time of transaction, characteristic of account to which a transaction is made.

**13.** A non-transitory computer-readable storage medium storing instructions thereon which, when executed by one or more processors, cause the one or more processors to perform the method of any preceding claim.

**14.** A data processing device comprising one or more processors and the non-transitory computer-readable storage medium of claim 13.

**Patentansprüche**

**1.** Computerimplementiertes Verfahren (200) zum Überwachen eines Modells für maschinelles Lernen zum Ermöglichen der Identifizierung betrügerischer Aktivitäten in einem Netzwerk und Bereitstellen von Korrekturmaßnahmen, wobei das Verfahren Folgendes umfasst:

Anwenden (201) eines Modells für maschinelles Lernen auf einen Datensatz, der sich auf Aktivitäten in dem Netzwerk bezieht, wobei der Datensatz eine Vielzahl von Merkmalen als Eingaben in das Modell für maschinelles Lernen umfasst, wobei das Modell für maschinelles Lernen an einem Trainingsdatensatz trainiert wurde, um betrügerische Aktivitäten in dem Netzwerk zu identifizieren;
Überwachen (203) eines Merkmals der Vielzahl von Merkmalen, um eine Abweichung des Merkmals von einem erwarteten Wert zu bestimmen, die eine falsche Identifizierung anzeigt, ob die Aktivität betrügerisch ist, wobei der Schritt des Überwachens Folgendes umfasst:

Bestimmen einer Merkmalsverteilung für das Merkmal zu einem aktuellen Zeitpunkt;
Vergleichen (205) der bestimmten Merkmalsverteilung mit einer Referenzmerkmalsverteilung für das Merkmal, wobei die Referenzmerkmalsverteilung aus dem Trainingsdatensatz bestimmt wird;
Bestimmen (207) einer unerwarteten Diskrepanz zwischen der bestimmten Merkmalsverteilung und der Referenzmerkmalsverteilung, die eine Merkmalsabweichung anzeigt; und
Ergreifen (209) von Korrekturmaßnahmen basierend auf dem Bestimmen der unerwarteten Diskrepanz zwischen der bestimmten Merkmalsverteilung und der Referenzmerkmalsverteilung, die die Merkmalsabweichung anzeigt;
wobei der Schritt des Überwachens eines Merkmals ferner Folgendes umfasst:
Verfolgen einer Änderung der Merkmalsverteilung für das Merkmal im Zeitverlauf durch Durchführen des folgenden Schritts:

Bestimmen einer Merkmalsverteilung für das Merkmal zu verschiedenen Zeitpunkten und Vergleichen der bestimmten Merkmalsverteilung zu jedem Zeitpunkt mit der Referenzmerkmalsverteilung für das Merkmal, um zu jedem Zeitpunkt einen Vergleichswert zu erzeugen; und
wobei der Schritt des Bestimmens einer unerwarteten Diskrepanz zwischen der bestimmten Merkmalsverteilung und der Referenzmerkmalsverteilung, die eine Abweichung anzeigt, ferner Folgendes umfasst: Vergleichen eines durchschnittlichen Vergleichswerts, der zu jedem Zeitpunkt aus dem Vergleichswert abgeleitet wird, über die Zeit, um eine Änderung der Merkmalsverteilung zu bestimmen, die die Merkmalsabweichung anzeigt.

**2.** Computerimplementiertes Verfahren nach Anspruch 1, wobei der Schritt des Vergleichens das Verwenden einer Jenson-Shannon-Divergenz umfasst, die basierend auf der bestimmten Merkmalsverteilung und der Referenzmerkmalsverteilung berechnet wird.

**3.** Computerimplementiertes Verfahren nach Anspruch 1 oder 2, wobei das Ergreifen von Korrekturmaßnahmen Folgendes umfasst: erneutes Trainieren des Modells für maschinelles Lernen basierend auf einem aktualisierten Trainingsdatensatz, der die bestimmte Merkmalsabweichung berücksichtigt.

**4.** Computerimplementiertes Verfahren nach Anspruch 3, ferner umfassend

Anwenden des neu trainierten Modells für maschinelles Lernen auf einen Datensatz, der sich auf Aktivitäten in einem Netzwerk bezieht; und
Identifizieren einer betrügerischen Aktivität in einem Netzwerk anhand des neu trainierten Modells für maschinelles Lernen.

**5.** Computerimplementiertes Verfahren nach einem der vorhergehenden Ansprüche, ferner umfassend das Erzeugen einer Warnung, dass eine falsche Identifizierung, ob eine Aktivität betrügerisch ist, basierend auf dem Bestimmen der unerwarteten Diskrepanz aufgetreten ist.

**6.** Computerimplementiertes Verfahren nach Anspruch 5, ferner umfassend das Ergreifen von Korrekturmaßnahmen nur dann, wenn die unerwartete Abweichung über oder unter einem Schwellenwert liegt.

**7.** Computerimplementiertes Verfahren nach einem der vorhergehenden Ansprüche, wobei die vorbestimmten Zeitpunkte täglich sind.

**8.** Computerimplementiertes Verfahren nach einem der vorhergehenden Ansprüche, wobei die aus dem Trainingsdatensatz bestimmte Referenzmerkmalsverteilung durch Folgendes bestimmt wird: Anordnen von Daten aus dem Trainingsdatensatz, die sich auf das Merkmal beziehen, in einer Reihe von Buckets, wobei jeder Bucket einen Wertebereich für ein solches Merkmal in dem Trainingsdatensatz darstellt.

**9.** Computerimplementiertes Verfahren nach Anspruch 8, wobei der Schritt des Anordnens von Daten ferner das Anordnen der Daten über dem 2. Perzentil in einem ersten Bucket und der Daten über dem 98. Perzentil in einem zweiten Bucket und das gleichmäßige Anordnen der verbleibenden Daten zwischen verbleibenden Buckets der Reihe von Buckets umfasst.

**10.** Computerimplementiertes Verfahren nach einem der vorhergehenden Ansprüche, wobei die bestimmte Merkmalsverteilung durch Folgendes bestimmt wird: Anordnen von Daten aus dem Datensatz, die sich auf das Merkmal beziehen, in einer Reihe von Buckets, wobei jeder Bucket einen Wertebereich für ein solches Merkmal darstellt.

**11.** Computerimplementiertes Verfahren nach einem der vorhergehenden Ansprüche, wobei das Netzwerk ein Finanznetzwerk ist und wobei die Aktivität Zahlungstransaktionen ist und die betrügerische Aktivität eine betrügerische Zahlungstransaktion ist.

**12.** Computerimplementiertes Verfahren nach Anspruch 11, wobei die Vielzahl von Merkmalen mindestens eines von Folgendem umfasst: Anzahl der Transaktionen von oder zu einem Konto in einem Zeitraum, Zeitpunkt der Transaktion, Charakteristik des Kontos, auf dem eine Transaktion getätigt wird.

**13.** Nichtflüchtiges computerlesbares Speichermedium, auf dem Anweisungen gespeichert sind, die, wenn sie durch einen oder mehrere Prozessoren ausgeführt werden, den einen oder die mehreren Prozessoren veranlassen, das Verfahren nach einem der vorhergehenden Ansprüche durchzuführen.

**14.** Datenverarbeitungsvorrichtung, umfassend einen oder mehrere Prozessoren und das nichtflüchtige computerlesbare Speichermedium nach Anspruch 13.

**Revendications**

**1.** Procédé mis en œuvre par ordinateur (200) pour surveiller un modèle d'apprentissage automatique permettant l'identification d'une activité frauduleuse dans un réseau, et la fourniture d'actions correctives, le procédé comprenant :

l'application (201) d'un modèle d'apprentissage automatique à un ensemble de données se rapportant à l'activité dans le réseau, l'ensemble de données comprenant une pluralité de caractéristiques en tant qu'entrées dans le modèle d'apprentissage automatique, le modèle d'apprentissage automatique ayant été entraîné sur un ensemble de données d'entraînement pour identifier une activité frauduleuse dans le réseau ;
la surveillance (203) d'une caractéristique de la pluralité de caractéristiques pour déterminer une dérive de la caractéristique par rapport à une valeur attendue indiquant une identification incorrecte du caractère frauduleux de l'activité, dans lequel l'étape de surveillance comprend :

la détermination d'une distribution de caractéristiques pour la caractéristique à un instant donné ;
la comparaison (205) de la distribution de caractéristiques déterminée à une distribution de caractéristiques de référence pour la caractéristique, la distribution de caractéristiques de référence étant déterminée à partir de l'ensemble de données d'entraînement ;
la détermination (207) d'un écart inattendu entre la distribution de caractéristiques déterminée et la distribution de caractéristiques de référence qui indique une dérive de caractéristique ; et

la prise (209) de mesures correctives sur la base de la détermination de l'écart inattendu entre la distribution de caractéristiques déterminée et la distribution de caractéristiques de référence qui indique la dérive de caractéristique ;
dans lequel l'étape de surveillance d'une caractéristique comprend en outre :

le suivi d'un changement dans la distribution de caractéristiques pour la caractéristique au fil du temps en réalisant l'étape suivante : la détermination d'une distribution de caractéristiques pour la caractéristique à différents moments et la comparaison de la distribution de caractéristiques déterminée à chaque moment à la distribution de caractéristiques de référence pour la caractéristique pour générer une valeur de comparaison à chaque instant ; et dans lequel l'étape de détermination d'un écart inattendu entre la distribution de caractéristiques déterminée et la distribution de caractéristiques de référence qui indique une dérive comprend en outre : la comparaison d'une valeur de comparaison moyenne, dérivée de ladite valeur de comparaison à chaque instant, au fil du temps pour déterminer un changement dans la distribution de caractéristiques indiquant la dérive de caractéristique.

2. Procédé mis en œuvre par ordinateur selon la revendication 1, dans lequel l'étape de comparaison comprend l'utilisation d'une divergence Jenson-Shannon calculée sur la base de la distribution de caractéristiques déterminée et de la distribution de caractéristiques de référence.

3. Procédé mis en œuvre par ordinateur selon la revendication 1 ou 2, dans lequel la prise de mesures correctives comprend : le réentraînement du modèle d'apprentissage automatique sur la base d'un ensemble de données d'entraînement mis à jour qui prend en compte la dérive de caractéristique déterminée.

4. Procédé mis en œuvre par ordinateur selon la revendication 3, comprenant en outre

l'application du modèle d'apprentissage automatique réentraîné à un ensemble de données se rapportant à l'activité dans un réseau ; et l'identification d'une activité frauduleuse dans un réseau à partir du modèle d'apprentissage automatique réentraîné.

5. Procédé mis en œuvre par ordinateur selon une quelconque revendication précédente, comprenant en outre
la génération d'une alerte indiquant qu'une identification incorrecte de l'activité frauduleuse s'est produite sur la base de la détermination de l'écart inattendu.

6. Procédé mis en œuvre par ordinateur selon la revendication 5, comprenant en outre la prise de mesures correctives uniquement lorsque l'écart inattendu est supérieur, ou inférieur à une valeur seuil.

7. Procédé mis en œuvre par ordinateur selon une quelconque revendication précédente, dans lequel les moments prédéterminés sont quotidiens.

8. Procédé mis en œuvre par ordinateur selon une quelconque revendication précédente, dans lequel la distribution de caractéristiques de référence déterminée à partir de l'ensemble de données d'entraînement est déterminée par :
l'agencement de données de l'ensemble de données d'entraînement se rapportant à la caractéristique dans une série de compartiments, chaque compartiment représentant une plage de valeurs pour cette caractéristique dans l'ensemble de données d'entraînement.

9. Procédé mis en œuvre par ordinateur selon la revendication 8, dans lequel l'étape d'agencement de données comprend en outre l'agencement des données au-dessus du 2ème percentile dans un premier compartiment, et des données au-dessus du 98ème percentile dans un second compartiment, et l'agencement de données restantes de manière égale entre les compartiments restants de la série de compartiments.

10. Procédé mis en œuvre par ordinateur selon une quelconque revendication précédente, dans lequel la distribution de caractéristiques déterminée est déterminée par :
l'agencement de données de l'ensemble de données se rapportant à la caractéristique dans une série de compartiments, chaque compartiment représentant une plage de valeurs pour cette caractéristique.

11. Procédé mis en œuvre par ordinateur selon une quelconque revendication précédente, dans lequel le réseau est un réseau financier, et dans lequel l'activité est constituée de transactions de paiement et l'activité frauduleuse est une transaction de paiement frauduleuse.

12. Procédé mis en œuvre par ordinateur selon la revendication 11, dans lequel la pluralité de caractéristiques comprennent au moins l'une des caractéristiques suivantes : nombre de transactions depuis ou vers un compte dans une période de temps, heure de la transaction, caractéristique du compte sur lequel une transaction est effectuée.

13. Support de stockage non transitoire lisible par ordinateur stockant des instructions sur celui-ci qui, lorsqu'elles sont exécutées par un ou plusieurs processeurs, amènent les un ou plusieurs processeurs à réaliser le procédé selon une quelconque revendication précédente.

14. Dispositif de traitement de données comprenant un ou plusieurs processeurs et le support de stockage non transitoire lisible par ordinateur selon la revendication 13.

FIG. 1

EP 4 243 341 B1

EP 4 243 341 B1

200 ─

201 — Applying a machine learning model to a dataset relating to activity in a network, the dataset comprising a plurality of features as inputs into the machine learning model, the machine learning model having been trained on a training dataset to identify fraudulent activity in a network

203 — Determining a feature distribution for a feature of the plurality of features at a current time to monitor the feature to determine drift of the feature from an expected value indicating incorrect identification of whether activity is fraudulent or not fraudulent

205 — Comparing the determined feature distribution to a reference feature distribution for the feature, the reference feature distribution determined from the training dataset

207 — Determining an unexpected discrepancy between the determined feature distribution and the reference feature distribution that indicates feature drift

209 — Taking corrective action based on determining the unexpected discrepancy between the determined feature distribution and the reference feature distribution that indicates feature drift

FIG. 2

FIG. 3

EP 4 243 341 B1

501 Data processing device

503   Memory

505   Processor

507   Communication interface

509   Storage interface

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2021103580 A